# FASCICULE DE BREVET EUROPEEN

(11) **EP 2 663 474 B1**
(45) Date de publication et mention de la délivrance du brevet: **04.11.2015**
(21) Numéro de dépôt: 12700074.3
(22) Date de dépôt: 11.01.2012
(51) Int. Cl.: B60R 25/02, B62D 5/04, B60R 25/04

(54) **PROCEDE DE COMMANDE AUTOMATIQUE DE L'ANTIVOL ELECTRIQUE DE COLONNE DE DIRECTION D'UN VEHICULE AUTOMOBILE**
ELEKTRISCHES DIEBSTAHLSCHUTZVERFAHREN FÜR DIE LENKSÄULE EINES KRAFTFAHRZEUGS
AUTOMATIC, ELECTRIC ANTITHEFT CONTROL METHOD FOR A VEHICLE AND ANTITHEFT SYSTEM FOR FOR AN AUTOMOBILE STEERING COLUMN

(30) Priorité: 13.01.2011 FR 1100116
(43) Date de publication de la demande: 20.11.2013
(73) Titulaire: Valeo Sicherheitssysteme GmbH, 85253 Erdweg (DE); U-Shin France SAS, 94046 Créteil Cedex (FR)
(72) Inventeur: GAUCH, Winfried, 85253 Erdweg (DE); BOLLINGER, Emmanuel, 85253 Erdweg (DE); ARTIGUES, François-Xavier, F-94046 Creteil (FR)
(74) Mandataire: Larger, Solène
(86) Numéro de dépôt international: PCT/EP2012/050369
(87) Numéro de publication internationale: WO 2012/095453

(56) Documents cités:
- WO-A2-03/080406
- DE-A1- 19 601 827
- DE-A1-102006 056 042

## Description

L'invention concerne un procédé de commande automatique de l'antivol électrique de colonne de direction d'un véhicule automobile.

De façon classique, un antivol électrique de colonne de direction comporte un pêne actionnable et destiné à venir s'engager dans un des 10 logements prévus sur la colonne lors d'un verrouillage et à être sorti de ce logement lors d'un déverrouillage. A titre d'exemple, un tel agencement est décrit dans le document de brevet EP 1 029 755.

Le document DE19601827 décrit un procédé selon l'art antérieur de la revendication 1.

Par ailleurs, de nos jours, la rotation de la colonne de direction au moyen du volant est assistée au moyen d'une assistance électrique de direction, allégeant la manoeuvre du véhicule.

Actuellement, lors de l'arrêt de son véhicule automobile, le conducteur doit effectuer une légère rotation du volant, pour assurer le bon verrouillage de l'antivol de colonne de direction, après arrêt du moteur. Ceci permet le bon engagement du pêne de l'antivol de colonne de direction dans un de ses logements de la colonne, lorsqu'il est mis en butée en bordure de ce logement. Classiquement, le conducteur doit prendre soin de tourner le volant jusqu'au clic indiquant le bon verrouillage et l'immobilisation du volant. Alors l'antivol assure pleinement sa fonction, en empêchant le volant et les roues directrices de tourner.

L'invention a pour objet de supprimer la nécessité de cette intervention manuelle du conducteur, qui peut être malencontreusement oubliée lors de l'arrêt du véhicule et qui présente un caractère récurent et non régulier particulièrement gênant.

Pour ce faire, l'intervention propose un procédé de commande automatique de l'antivol de colonne de direction d'un véhicule automobile, consistant à opérer une rotation automatique déterminée de la colonne de direction, de verrouillage de l'antivol, à l'arrêt du moteur de ce véhicule afin d'assurer le verrouillage de l'antivol,
ladite rotation de la colonne de direction du véhicule est précédée par une détermination de la position du pêne de l'antivol de colonne de direction et ladite rotation est effectuée lorsque qu'il est déterminé que le pêne n'est pas engagé dans un logement de la colonne.

Très avantageusement, le véhicule automobile comportant une assistance électrique de direction, ladite rotation de verrouillage est effectuée au moyen de cette assistance électrique. L'invention peut être ainsi mise en place sans agencement de commande supplémentaire.

Par ailleurs, dans certaines configurations, par exemple lorsque les roues sont en butée contre un trottoir, et lorsque le conducteur a pris soin d'effectuer cette action de tourner le volant jusqu'au bon engagement du pêne dans un de ses logements de la colonne, il peut être difficile pour l'antivol électrique d'extraire le pêne de ce logement, lorsque le conducteur démarre le véhicule, en raison de la pression exercée sur le pêne par l'intermédiaire des roues et de la colonne de direction. Dans ce cas, en général, le conducteur est averti qu'il doit effectuer une légère rotation du volant pour aider à la libération du pêne.

Avantageusement, le procédé selon l'invention consiste également à opérer une rotation automatique déterminée inverse de la colonne de direction, dite de déverrouillage de l'antivol, après le démarrage du moteur de ce véhicule.

De préférence, ladite rotation de déverrouillage de l'antivol est précédée par une détermination de la position du pêne de l'antivol de colonne de direction et ladite rotation est effectuée lorsque qu'il est déterminé que le pêne est dans un logement de la colonne, après effort de rotation sur le volant.

Très avantageusement, le véhicule automobile comportant une assistance électrique de direction, ladite rotation de déverrouillage est effectuée au moyen de cette assistance électrique. L'invention peut être ainsi mise en place sans agencement de commande supplém entaire.

L'invention est décrite ci-après plus en détail à l'aide de figures illustrant un mode de réalisation préféré de l'invention.
La figure 1 illustre schématiquement le procédé conforme à l'invention.
La figure 2 est une vue schématique de détail de la colonne de direction.

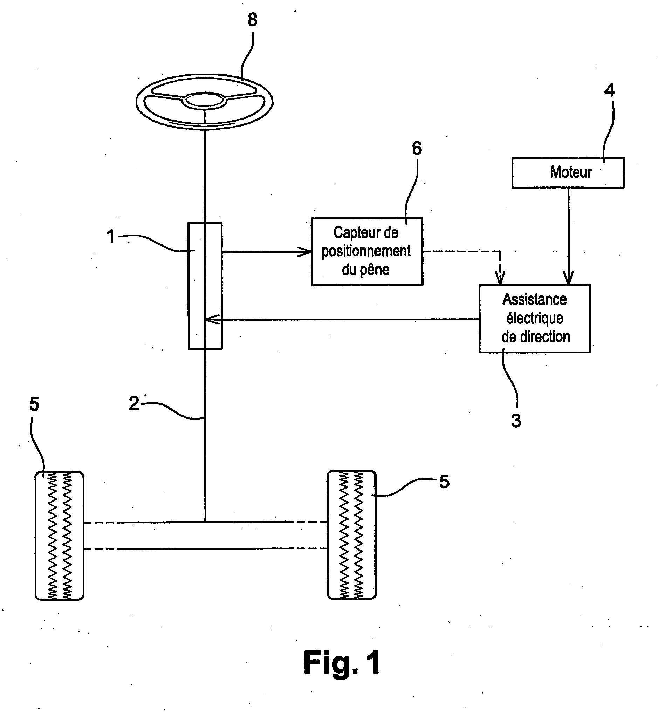

Comme illustré sur la figure 1, le procédé de commande automatique de l'antivol 1 de colonne de direction 2 d'un véhicule automobile comportant une assistance électrique de direction 3 consiste, selon l'invention, à opérer une rotation automatique déterminée de la colonne de direction 2 connectant le volant 8 et les roues directrices 5 au moyen de cette assistance électrique 3 à l'arrêt du moteur 4 de ce véhicule. Cette rotation est une rotation de verrouillage de l'antivol.

De préférence, cette rotation de la colonne de direction 2 du véhicule est précédée par une détermination de la position du pêne de l'antivol 1 de colonne de direction au moyen d'un capteur 6 et la rotation est effectuée lorsqu'il est déterminé que le pêne n'est pas engagé dans un logement de la colonne 1.

Le même équipement peut permettre la mise en oeuvre d'un procédé, selon l'invention, consistant également à opérer une rotation automatique déterminée inverse de la colonne de direction 2, dite de déverrouillage de l'antivol, au moyen de cette assistance électrique 3 après le démarrage du moteur 4 de ce véhicule.

De préférence, cette rotation de la colonne de direction 2 du véhicule est précédée par une détermination de la position du pêne de l'antivol 1 de colonne de direction et cette rotation est effectuée lorsque qu'il est déterminé que le pêne est dans un logement de la colonne 2, après effort de rotation sur le volant 8. Ainsi le dégagement du pêne est assisté, lorsqu'il s'avère que la rotation manuelle du volant est difficile, dans certaines configurations, par exemple lorsque les roues sont en butée contre un trottoir.

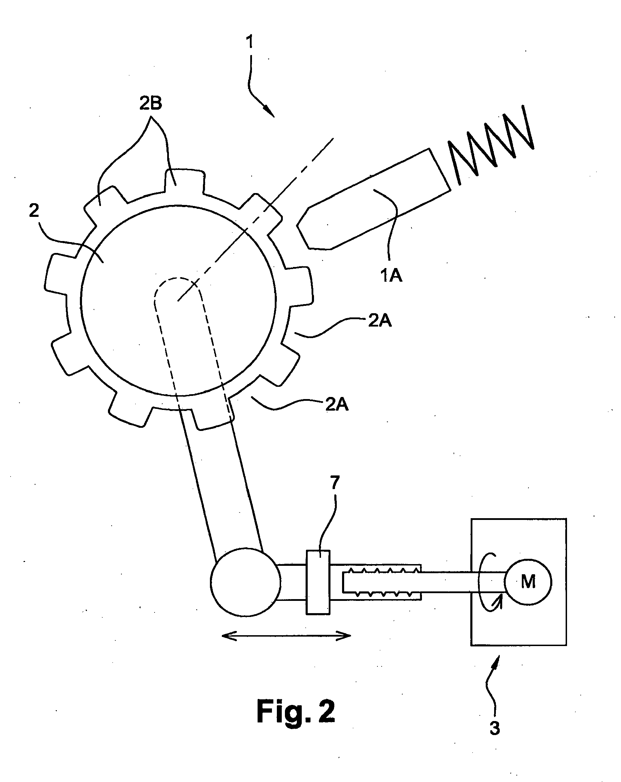

Sur la figure 2 est représentée schématiquement la colonne de direction 2 pourvu de logements 2A du pêne 1A de l'antivol 1. La colonne de direction 2 est connectée à l'assistance de direction 3 qui peut être un moteur électrique dont le déplacement en rotation de son arbre est transformé en rotation de la colonne 2 par un agencement de vis sans fin et de bielle. Cette assistance de direction 3 est pilotée au moyen d'un capteur de couple 7 du volant et de la colonne.

La rotation automatique déterminée de la colonne de direction 2 selon le procédé de verrouillage de l'antivol conforme à l'invention est donc déterminée en fonction de la configuration des logements 2A de la colonne, plus précisément de la largeur angulaire des crêtes 2B les séparant, afin d'assurer un engagement complet du pêne 1A dans un logement lorsqu'il est positionné en butée contre la crête 2B adjacente à ce logement 2A. En pratique, elle correspond à quelques degrés de rotation de la colonne de direction 2.

La rotation automatique déterminée de la colonne de direction 2 selon le procédé de déverrouillage de l'antivol conforme à l'invention est quant à elle destinée à réduire le couple de rotation qui s'oppose au dégagement du pêne 1A par l'antivol de direction 1 et est inverse à la rotation de verrouillage de l'antivol. Grâce au capteur de couple 7, elle est de préférence mise en oeuvre après un effort de rotation sur le volant 8 démontrant une difficulté de déverrouillage manuel.

## Revendications

1. Procédé de commande de l'antivol électrique (1) de colonne de direction (2) d'un véhicule automobile, consistant à opérer une rotation automatique déterminée de la colonne de direction (2), de verrouillage de l'antivol (2), à l'arrêt du monteur (4) de ce véhicule afin d'assurer le verrouillage de l'antivol (2) characterisé en ce que, ladite rotation de la colonne de direction (2) du véhicule étant précédée par une détermination de la position du pêne (1A) de l'antivol de colonne de direction (1) et ladite rotation étant effectuée lorsque qu'il est déterminé que le pêne (1A) n'est pas engagé dans un logement (2A) de la colonne.

2. Procédé selon la revendication 1, **caractérisé en ce que** ladite rotation de verrouillage de l'antivol (2) est déterminée en fonction de la largeur angulaire des crêtes (2B) séparant les logements (2A) de la colonne.

3. Procédé selon l'une des revendications précédentes, le véhicule automobile comportant une assistance électrique de direction (3), **caractérisé en ce que** ladite rotation de verrouillage est effectuée au moyen de cette assistance électrique (3).

4. Procédé selon l'une des revendications précédentes, **caractérisé en ce qu'**il consiste à opérer une rotation automatique déterminée inverse de la colonne de direction (2), dite de déverrouillage de l'antivol (2), après le démarrage du moteur (4) de ce véhicule.

5. Procédé selon la revendication précédente, **caractérisé en ce que** ladite rotation de déverrouillage de l'antivol du véhicule est précédée par une détermination de la position du pêne (1A) de l'antivol de colonne de direction (1) et **en ce que** cette rotation est effectuée lorsque qu'il est déterminé que le pêne (1A) est dans un logement (2A) de la colonne, après effort de rotation sur le volant (8).

6. Procédé selon la revendication 4 ou 5, le véhicule automobile comportant une assistance électrique de direction (3), **caractérisé en ce que** ladite rotation de déverrouillage est effectuée au moyen de cette assistance électrique (3).

## Patentansprüche

1. Verfahren zur Steuerung der elektrischen Diebstahlschutzvonichtung (1) der Lenksäule (2) eines Kraftfahrzeugs, das darin besteht, eine bestimmte automatische Rotation der Lenksäule (2), zur Verriegelung der Diebstahlschutzvoruchtung (2), bei Stillstand des Motors (4) dieses Fahrzeugs auszuführen, um die Versiegelung der Diebstahlschutzvomichtung (2) sicherzustellen, **dadurch gekennzeichnet, dass** der Rotation der Lenksäule (2) eine Bestimmung der Position des Riegels (1A) der Diebstahlschutzvomichtung der Lenksäule (1) vorausgeht, und dass die Rotation ausgeführt wird, wenn bestimmt wird, dass der Riegel (1A) nicht in eine Aufnahme (2A) der Säule eingefügt ist.

2. Verfahren nach Anspruch 1, dadurch die gekennzeichnet, dass die Rotation zur Versiegelung der Diebstahlschutzvoruchtung (2) in Abhängigkeit von der Winkelbereite der Gipfel (2B), die die Aufnahmen (2A) der Säule trennen, bestimmt wird.

3. Verfahren nach einem der vorhergehenden Ansprüche, wobei das Kraftfahrzeug eine elektrische Servolenkung (3) umfasst, **dadurch gekennzeichnet, dass** die Rotation zur Versiegelung mittels dieser elektrischen Servolenkung (3) ausgeführt wird.

4. Verfahren nach einem der vorhergehenden Ansprüche, **dadurch gekennzeichnet, dass** es darin besteht, eine bestimmte automatische umgekehrte Rotation der Lenksäule (2), zur Entriegelung der Diebstahlschutzvomichtung genannt, nach dem Anlassen des Motors (4) dieses Fahrzeugs auszuführen.

5. Verfahren nach dem vorhergehenden Anspruch, **dadurch gekennzeichnet, dass** der Rotation zur Entriegelung der Diebstahlschutzvomichtung des Fahrzeugs eine Bestimmung der Position des Riegels (1A) der Diebstahlschutzvorrichtung der Lenksäule (1) vorausgeht, und dass diese Rotation ausgeführt wird, wenn bestimmt wird, dass der Riegel (1A) in einer Aufnahme (2A) der Säule nach Rotationskraft auf dem Lenkrad (8) ist.

6. Verfahren nach Anspruch 4 oder 5, wobei das Kraftfahrzeug eine elektrische Servolenkung (3) umfasst, dadurch die gekennzeichnet, dass die Rotation zur Entriegelung mittels dieser elektrischen Servolenkung (3) ausgeführt wird.

## Claims

1. Electric antitheft control method (1) for the steering column (2) of a motor vehicle, consisting in performing a determined automatic rotation of the steering column (2), for locking the antitheft control (2), at the stopping of the engine (14) of this vehicle in order to provide for the antitheft locking (2) **characterised in that** said rotation of the steering column (2) of the vehicle is preceded by a determination of the position of the latch (1A) of the steering column antitheft (1) and said rotation is carried out when it is determined that the latch (1A) is not engaged in a housing (2A) of the column.

2. Method according to claim 1, **characterised in that** said locking rotation of the antitheft control (2) is determined according to the angular width of the ridges (2B) that separate the housings (2A) from the column.

3. Method according to one of the preceding claims, with the motor vehicle comprising an electric steering assistance (3), **characterised in that** said locking rotation is carried out by means of this electrical assistance (3).

4. Method according to one of the preceding claims, **characterised in that** it consists in performing an inverse determined automatic rotation of the steering column (2), referred to as unlocking of the antitheft control (2), after the starting of the engine (4) of this vehicle.

5. Method as claimed in the preceding claim, **characterised in that** said unlocking rotation of the antitheft control of the vehicle is preceded by a determination of the position of the latch (1A) of the steering column antitheft control (1) and **in that** this rotation is carried out when it is determined that the latch (1A) is in a housing (2A) of the column, after a rotation force on the steering wheel (8).

6. Method according to claim 4 or 5, with the motor vehicle comprising an electrical steering assistance (3), **characterised in that** said unlocking rotation is carried out by means of this electric assistance (3).
